# EUROPEAN PATENT APPLICATION

(11) **EP 1 416 397 A1**
(43) Date of publication of application: **06.05.2004**
(21) Application number: 02024435.6
(22) Date of filing: 29.10.2002
(51) Int. Cl.: G06F 17/30

(54) **A method for selecting a renderer based on the browser type of the client, using scores**

(71) Applicant: SAP Aktiengesellschaft, 69190 Walldorf (DE)
(72) Inventor: Dietl, Josef, 69226 Nussloch (DE)
(74) Representative: Schiuma, Daniele Wolfgang

(57) **Abstract**

Computer implemented method for selecting a renderer, comprising
receiving a browser identification in the form of a user agent string from a client browser, comparing the user agent string with browser templates using a scoring application, wherein the scoring application determines a score for a comparison made between the user agent string and a browser template, wherein the score reflects the similarity between said user agent string and the respective browser template, and selecting based on a result from the comparison a renderer for use in communication with the client browser, wherein the scoring application determines the score by computing a number of matching characters in a browser template divided by a number of characters in the user agent string.

## Description

The invention can relate to a computer-implemented method for selecting a renderer.

Within a web-based client server computer system, a client accesses a web application on a server using a browser. Over the http protocol the browser sends a parameter called "user agent" in the http header of every request to identify the type of browser for the server. This identification of the browser is used by the server to correctly render the HTML code such that that specific browser can display the information correctly. The "user agent" header is then mapped to a static table to choose the specific renderer, or mapped to a static table of individual properties for the required specific output methods.

These tables are large, with at present typically more than 100 properties listing bugs (e.g. certain cell phones do not recognize title tags) or specific features of each browser and their release for each possible browser (e.g. Netscape 4.7, 4.8, 4.9, Internet Explorer 5.0, 5.1, 6.0 etc.). Due to the steadily increasing number of different browsers in use, it becomes increasingly difficult to maintain an effective list with all known browsers. It is even more costly to provide for a specific renderer for each browser; in particular as with almost every new release or bug fix for a specific browser a new renderer is required.

It is an object of the invention to provide a method that more efficiently identifies a renderer matching a specific browser for the server. To achieve this goal the invention provides for a method according to claim 1. By selecting a browser based on a selection criterion, a good renderer can be selected for each client, without the need for constant maintenance to insure the correct functioning of the server, and without the need to provide for a specific renderer for every browser in use.

Further embodiments of the invention are the subject of the dependent claims.
Further objects, aspects and advantages of the invention will be better understood from the following detailed description of a preferred embodiment of the invention with reference to the drawing, in which:

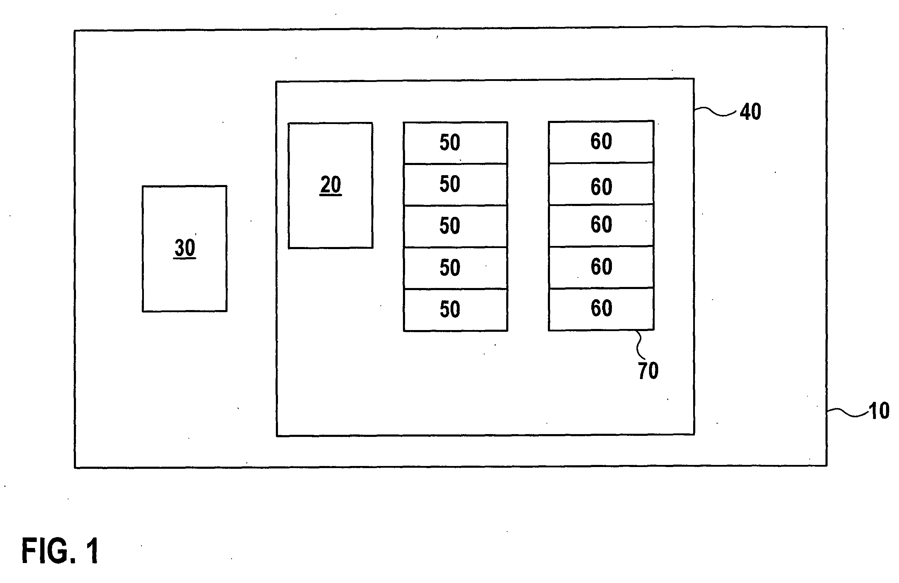

Fig. 1 shows schematically an example of an embodiment of the invention,
Fig. 2 shows schematically an example of a flow chart of an embodiment of the invention.

In various embodiments of the invention, a computer system is provided. In one example, the computer system is embodied as a server computer 10. Server computers or servers are per se known in the art, and are used to supply client computers with information, for example in the form of web pages. The server 10 has a processing section 30, and a memory section 40. In the memory section 40, web page information 20 is stored, as well as a plurality of renderers 50. A renderer is a computer application, stored in the form of a computer program, that when processed by the processing section, prepares web page information such that it can be interpreted by a browser run on a client computer. The renderers 50 are each different in that they each prepare the web information according to a specific standard. Each of the renderers 50 is associated with at least one identifier in the form of a browser template 60. The respective browser templates 60 are stored in a table 70 in the memory section 40.

A browser template can for example be expressed in the form of a string such as for example:
"Mozilla/5.0 (*) * Netscape6/*",
"Mozilla/5.0 (Windows; U; Windows NT 5.0; en-US; rv:0.9.4.1) Gecko/20020508 Netscape6/6.2.3", wherein "*" signifies a wildcard character.

In the first example the string indicates that the associated renderer is capable to render web pages for use for a series of releases, in this example all Netscape browsers of the 6 series release. In the second example the associated renderer is capable to render web pages specific release, in this case Netscape 6/6.2.3. The invention is not limited to the two examples mentioned; according to the invention any browser or browser type or series can be named in the browser template.

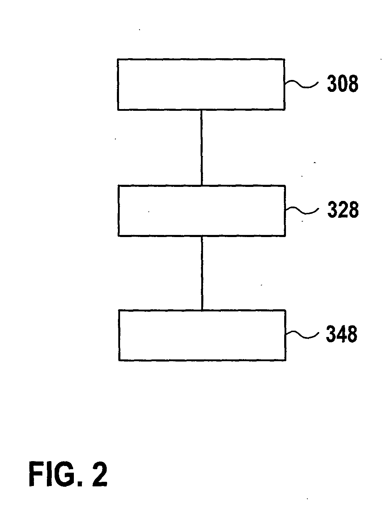

In use, the server 10 receive from a client computer that connects with the server an identifier for the browser that the client computer is currently using, for example a user agent identifier in the http header which identifies the browser, see step 308 in Fig. 2.

The server 10 is further provided with a scoring application. The scoring application is in this example embodied in a computer program that is stored in the memory section 40. The application can be embodied for example in a stand-alone computer program product, a programming module, any unit of computer programming, programmed logic, and in any other suitable form. The scoring application can be executed by the server 10. When executed by the server, the scoring application compares the user agent ("UA") string with the browser template strings contained in the table 70, see step 328 in Fig. 2. The scoring application determines a score for each comparison made between the user agent string and a browser template, wherein the score reflects the similarity between both strings. For example a higher score can indicate a better match or conformity, and a lower score can indicate a lesser match or conformity. Based on the determined scores, one of the browser templates is selected (see step 348 in Fig. 2), and the renderer that corresponds with the selected template is used in communication with that specific browser.

The template can for example be selected on basis of the highest score among all templates compared, or for example be the first score that matches or exceeds a predetermined minimum value of the score. In the latter example of a selection method, the selection process can proceed faster under certain conditions. In another embodiment of the invention, the selection process can be performed such that only a maximum score, i.e. a complete match, leads to a direct selection of a browser template, and if no template is directly selected a default (predetermined) browser template (and corresponding renderer) is chosen.

In one example of an embodiment or example the user agent string "Netscape 6.03" is transmitted by a client, the string being described in the example using simplified UA strings. In one embodiment of the invention the score can be for example be computed as the number of matching characters in a template (excluding the wildcards) divided by number of characters of the UA string. The comparison with a first browser template "Netscape 6.03" would for example deliver a score of 1 (or 100%), as all characters of the string match. The comparison with a second browser template "Netscape 6*" delivers a score of 10/13 (or 77%) as only 10 characters of the template fit in with the user agent string having in total 13 characters. Therefore the browser template "Netscape 6.03" would be selected by the scoring application.

In a further example the score of the user agent string "Mozilla/4.0 (compatible; MSIE 5.5; Windows NT 5.0)" is compared with a first template "Mozilla/4.0 (compatible; MSIE *; Windows NT *)" is 44/50 = 0,88 (or 88%).

In an even further example the score of the user agent string "Mozilla/4.0 (compatible; MSIE 5.5; Windows NT 5.0)" relative to respectively a second template "Mozilla/4.0 (compatible; MSIE 5.5; Windows NT *)" and a third template
"Mozilla/4.0 (compatible; MSIE *; Windows NT 5.0)" is for both cases 0.94 or (94%).

Preferably, a selection should be made in one or two evaluation steps or less. If a tied score occurs, in one example of an embodiment of the invention any renderer with the maximum score can be chosen.

By selecting a browser based on a selection criterion, while assuming that similar user agent strings require similar browsers, a good renderer can be selected for each client, without the need for constant maintenance to insure the correct functioning of the server, and without the need to provide for a specific renderer for every browser in use.

The invention further relates to a program storage device readable by a computer system, embodying a program of instructions executable by the computer system to perform any method according to the invention. As this invention may be embodied in several forms without departing from the spirit of essential characteristics thereof, the present embodiment is therefore illustrative and not restrictive, since the scope of the invention is defined by the appended claims rather than by the description preceding them, and all changes that fall within the metes and bounds of the claims, or equivalence of such metes and bounds thereof are therefore intended to be embraced by the claims.

## Claims

1. Computer implemented method for selecting a renderer, comprising
receiving a browser identification in the form of a user agent string from a client browser (308),
comparing said user agent string with at least two browser templates using a scoring application (328), wherein said scoring application determines a score for a comparison made between the user agent string and a browser template, wherein said score reflects the similarity between said user agent string and said respective browser template, and
selecting based on a result from said comparison a renderer for use in communication with said client browser (348).

2. Method according to claim 1, wherein the scoring application determines said score by computing a number of matching characters in a browser template divided by a number of characters in the user agent string.

3. Method according to claim 1 or 2, comprising selecting a renderer based on a maximum score determined by said scoring application.

4. Method according to claim 1, comprising selecting a renderer based on a first score that matches a predetermined minimum value of the score determined by the scoring application.

5. Method according to any of the preceding claims, wherein the selection comprises selecting a renderer from among a plurality of renderers.

6. Program storage device readable by a computer system, embodying a program of instructions executable by the computer system to perform a method according to any of claims 1-4.
